# EUROPEAN PATENT APPLICATION

(11) **EP 1 909 429 A1**
(43) Date of publication of application: **09.04.2008**
(21) Application number: 06713532.7
(22) Date of filing: 10.02.2006
(51) Int. Cl.: H04L 9/32

(54) **IDENTIFICATION MANAGEMENT SYSTEM FOR AUTHENTICATION OF ELECTRONIC DEVICES**

(30) Priority: 25.07.2005 JP 2005214375
(71) Applicant: MATSUSHITA ELECTRIC INDUSTRIAL CO., LTD., Osaka 571-8501 (JP)
(72) Inventor: TOJO, Masaaki Matsushita Electric Industrial Co.,Ltd, 2-1-61 Shiromi, Chuo-ku Osaka 540-6207 (JP); FUKUI, Kohtaro Matsushita Electric Industrial Co.,Ltd, 2-1-61 Shiromi, Chuo-ku Osaka 540-6207 (JP); IKEDA, Takumi Matsushita Electric Industrial Co.,Ltd, 2-1-61 Shiromi, Chuo-ku Osaka 540-6207 (JP)
(74) Representative: Betten & Resch
(86) International application number: PCT/JP2006/302390
(87) International publication number: WO 2007/013198

(57) **Abstract**

In a system that provides services to electronic devices, the authentication for settlements must be done for each of the electronic devices that receive the services. Thus, for example, even if a user wants to make a payment via a credit company, with which he has a contract, or his bank account by use of his own but different electronic device, he actually cannot do so, which is inconvenient for the user. In view of the above fact, the present invention proposes a system wherein an identification management part of an identification management server, which receives an assurance request from a first determination server, makes a search, based on a request of using of a second determination server from a first electronic device, whereby an assurance is outputted based on a result of that search. The first determination server outputs, based on this assurance, an assured service commission to the second determination server, thereby associating the identification management of the user with another vertical integration form to achieve an environment for providing services in a more flexible manner.

## Description

### BACKGROUND OF THE INVENTION

### Field of the Invention

The present invention relates to an identification management system for authentication of electronic device.

### Description of the Related Art

In Japanese Unexamined Patent Application Publication No. 2004-227055, a service providing system, which provides service requested from electronic device, and processes settlement for the order.

However, in Japanese Unexamined Patent Application Publication No. 2004-227055, since authentication for the settlement is carried out only with respect to each apparatus receiving the service, for example, in cases where a user desires to pay by another user's terminal apparatus through a credit card company or a bank account, the above system is not available, thereby causing inconveniences for the user.

### SUMMARY OF THE INVENTION

In order to solve the above deficiency, it is an objective of the present invention to provide a system, in which based on a usage request for the second determination server from the first electronic apparatus, a management server for identification, which has received a proof request outputted from a first determination server, carries out searching a management unit for identification, and if shared identification information is managed, a proof is outputted. The first determination server is capable of outputting a service request with proof to a second determination server based on the proof.

In addition, based on a usage request for the second determination server from the first electronic apparatus, the management server for identification, which has received a service request with proof request outputted from the first determination server, carries out a search of the management unit for identification, and based on the search result, the management server for identification may output the service request with proof to the second determination server.

In addition, based on a usage request for the second determination server from the first electronic apparatus, the second determination server may output the proof request to the management server for identification. In response to this, the management server for identification may carry out a search of the management unit for identification, and may output the proof to the second determination server based on the search result.

According to the present invention, it becomes possible to identify a user who uses a plurality of electronic apparatuses without depending on identification of electronic apparatus. Therefore, it becomes unnecessary that one electronic apparatus is bound by one service system, thereby removing boundaries between service systems. Accordingly, it is possible to use a plurality of service systems across the boundaries by using only one electronic apparatus.

### BRIEF DESCRIPTION OF THE DRAWINGS

Fig. 1 is a conceptual diagram explaining problems as a preliminary step of a first embodiment.
Fig. 2 is a conceptual diagram showing the first embodiment.
Fig. 3 is a functional block diagram showing the first configuration of the first embodiment.
Fig. 4 is a concrete functional block diagram concretely showing the first configuration of the first embodiment.
Fig. 5 is a functional block diagram showing the second configuration of the first embodiment.
Fig. 6 is a diagram showing a hardware configuration of the present invention.
Fig. 7 is a flow chart showing processing flow of the first embodiment.
Fig. 8 is a first conceptual diagram showing a second embodiment.
Fig. 9 is a second conceptual diagram showing the second embodiment.
Fig. 10 is a functional block diagram showing the first configuration of the second embodiment.
Fig. 11 is a concrete functional block diagram concretely showing the first configuration of the second embodiment.
Fig. 12 is a functional block diagram showing the second configuration of the second embodiment.
Fig. 13 is a flow chart showing a processing flow of the second embodiment.
Fig. 14 is a conceptual diagram showing a third embodiment.
Fig. 15 is a functional block diagram showing the first configuration of the third embodiment.
Fig. 16 is a concrete functional block diagram concretely showing the first configuration of the third embodiment.
Fig. 17 is a functional block diagram showing the second configuration of the third embodiment.
Fig. 18 is a flow chart showing a processing flow of the third embodiment.

### DETAILED DESCRIPTION OF THE PREFERRED EMBODIMENTS

Hereinbelow, embodiments of the present invention will be described. The present invention is not to be limited by the disclosed embodiments, and may be embodied in various forms without departing from the scope of the invention.

### <<First embodiment>>

### <Concept>

Hereinafter, a first embodiment will be described. The first embodiment is a system comprising service server groups, electronic apparatuses, determination servers, and management server for identification. In the system, based on a usage request for the second determination server from the first electronic apparatus, the management server for identification, which has received a first proof request outputted from the first determination server, carries out a search of the management unit for identification, and outputs the proof based on the search result.

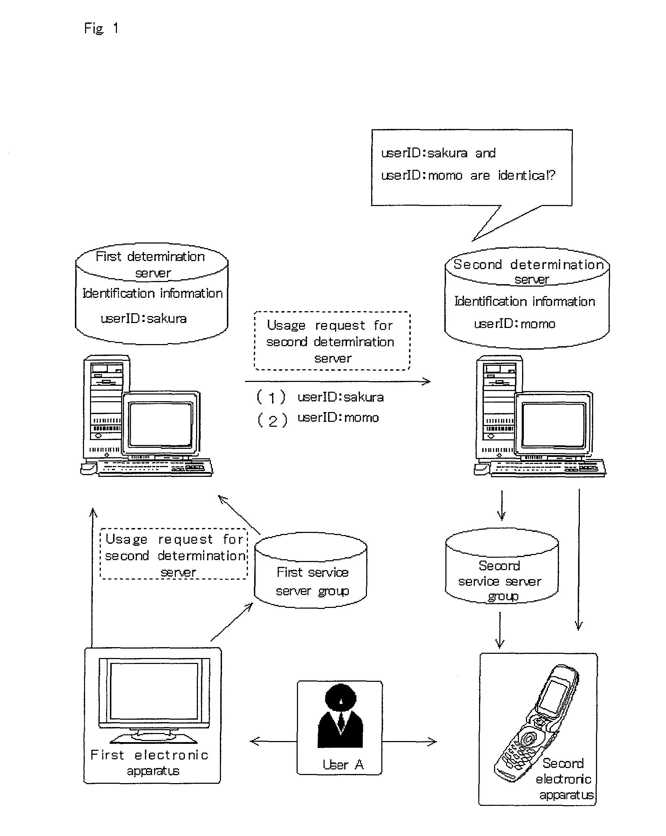

Fig. 1 is a conceptual diagram explaining problems as a preliminary step of a first embodiment. In cases where service is provided by utilizing electronic apparatus, generally, processing of payment for the service to a service provider etc. is carried out via a determination server in the same system. Therefore, in cases where the first service is provided by utilizing the first electronic apparatus, processing of payment for the service to a service provider etc. is carried out via the first determination server. Meanwhile, in the present invention, a usage request for the second determination server from the first electronic apparatus to the first determination server is carried out, so that the payment for the service received by the first electronic apparatus can be paid via the second determination server. Thus, it is an objective of the present invention to implement cross-cutting use of services between different systems. In this case, the first determination server receives usage request for the second determination server from the first electronic apparatus, and sends it to the second determination server. This usage request includes identification information for identifying a user.

Generally, a user A registers userID to the first and second determination servers upon making a contract for service provision. As an example, here, userID:sakura is registered to the first determination server, and userID:momo is registered to the second determination server. At the outset, the first electronic apparatus outputs a usage request for the second determination server, including identification information shared with the userID:sakura, to the first determination server (1). However, since the identification information stored in the second determination server is userID:momo, and not identical with the userID:sakura, the second determination server cannot accept the usage request, and service is not provided. In order to achieve the request, the user corrects the identification information to the userID:momo, so that the first electronic apparatus re-outputs a usage request for the second determination server to the first determination server (2). Here, the identification information (corrected to the userID:momo), included in the usage request, and the identification information (userID:momo), stored in the second determination server, are identical to each other. However, if uniqueness of the identification information is not proved, it is problematic in that the second determination server determines that the usage request is acceptable. Therefore, as described hereinbelow, in the system of the present invention, the equivalent identification information managed in the first and second determination servers is unique identification information, and it is guaranteed that the identification information is the shared identification information registered by one user.

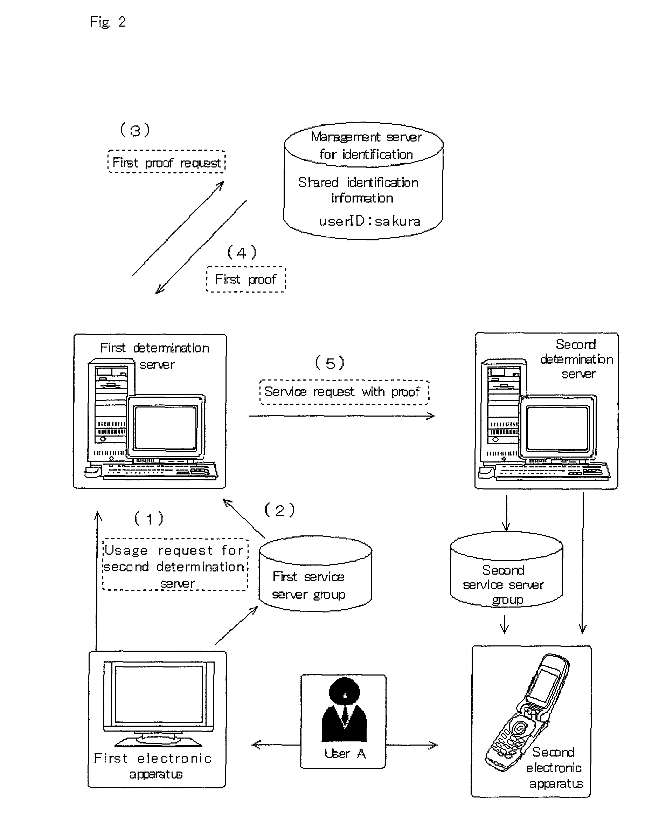

Fig. 2 is a conceptual diagram showing the first embodiment. Fig. 2 shows a relation between the respective servers and apparatuses configuring the system of the first embodiment. The first electronic apparatus and the second electronic apparatus are used by the one user A. The respective electronic apparatuses can receive various services such as internet browsing or reproducing content from a service server. In order to receive the service, a user preliminarily registers the shared identification information to the management server for identification. Further, the user is required to register the shared identification information to the respective determination servers.

At the outset, the first determination server receives the usage request for the second determination server from the first electronic apparatus (1). Note that the usage request may be received via the first service server (2). Subsequently, the first determination server outputs the first proof request including the shared identification information based on the usage request (3). This is for acquiring the proof, indicating that the shared identification information (userID:sakura) is unique identification information in the system, from the management server for identification. Subsequently, the management server for identification searches the management unit based on the first proof request outputted by the first determination server, and outputs the first proof based on a search result (4). Subsequently, the first determination server outputs a service request with proof including the shared identification information based on the first proof received from the management server for identification (5). Here, the second determination server receives the service request with proof, confirms the proof, and provides the service in response to the received service request. Further, based on the service request with proof, the shared identification information of the user and the identification information of second electronic apparatus may be correlated and stored, and may be searched by means of the shared identification information as a key. This will be described in the second configuration of the first embodiment.

### <First Configuration of First Embodiment >

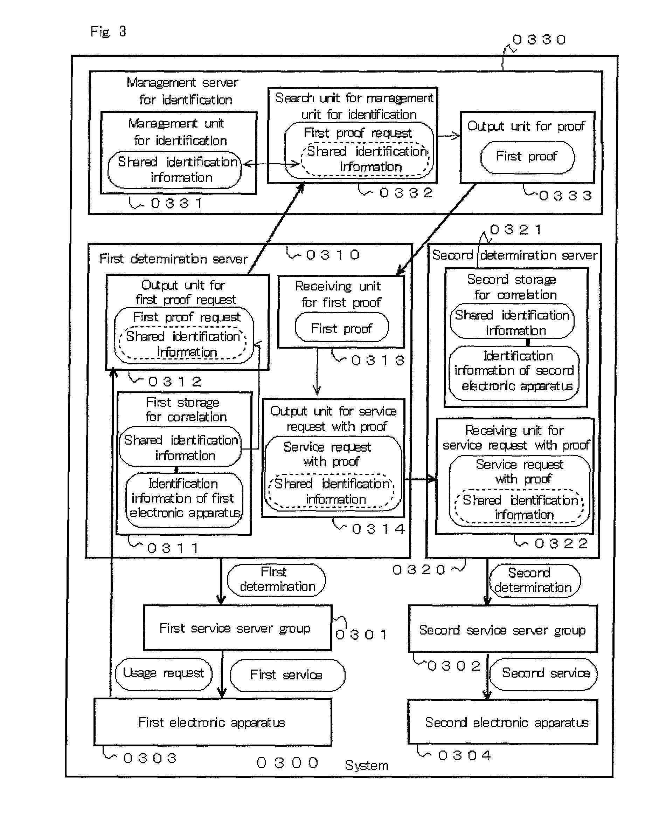

Fig. 3 is a functional block diagram of the first embodiment. A 'system' (0300) of the first embodiment as shown in Fig. 3 comprises a 'first service server group' (0301), a 'second service server group' (0302), a 'first electronic apparatus' (0303), a 'second electronic apparatus' (0304), a 'first determination server' (0310), a 'second determination server' (0320), and a 'management server for identification' (0330). The first determination server (0310) comprises a 'first storage unit for correlation' (0311), an 'output unit for first proof request' (0312), a 'receiving unit for first proof (0313), and a 'output unit for service request with proof (0314), and the second determination server (0320) further comprises a 'second storage unit for correlation' (0321), and a 'receiving unit for service request with proof (0322). In addition, the management server for identification (0330) further comprises a 'management unit for identification' (0331), a 'search unit for management unit for identification' (0332), and an 'output unit for proof (0333).

### <Service Server Group>

The 'first service server group' (0301) provides a first service to a first electronic apparatus based on a first determination. The 'first determination' means process and result of determination on whether the first electronic apparatus can receive the first service from the first service server group. Until the first determination is acquired from the first server, the first electronic apparatus cannot receive the first service. The 'first service' is content provided to the first electronic apparatus such as browsing of internet, download of content, or transmission/reception of e-mail. The first service may be not only a simple service but also a plurality of services. The reason for using the term 'first service server group' is that a plurality of service servers exist for the plurality of services.

The 'second service server group' (0302) provides a second service to a second electronic apparatus based on a second determination. The 'second determination' means process and result of determination on whether the second electronic apparatus can receive the second service from the second service server group. Until the second determination is acquired from the second server, the second electronic apparatus cannot receive the second service. The 'second service' is content provided to the second electronic apparatus such as browsing of internet, download of content, or transmission/reception of e-mail. The second service may be not only a simple service but also a plurality of services. The reason for using the term 'second service server group' is that a plurality of service servers exist for the plurality of services. Further, a server may be redundantly included in the first and second service server groups.

### <Electronic Apparatus>

The 'first electronic apparatus' (0303) is used by the user, and receives the first service from the first service server group. The first electronic apparatus corresponds to general electronic apparatus, and examples thereof include a communication terminal (e.g., PC or digital TV), a mobile terminal (e.g., mobile phone or PDA). The user accesses the first determination server or the first service server group, and makes usage request in order to receive service via the first electronic apparatus. Note that, normally, the first electronic apparatus cannot receive service from the second service server group.

The 'second electronic apparatus' (0304) is used by the user, and receives the second service from the second service server group. The second electronic apparatus corresponds to general electronic apparatus, and examples thereof include a communication terminal (e.g., PC or digital TV), a mobile terminal (e.g., mobile phone or PDA). The user accesses the second determination server or the second service server group, and makes usage request in order to receive service via the second electronic apparatus. Note that, normally, the second electronic apparatus cannot receive service from the second service server group. In this case, the first electronic apparatus and the second electronic apparatus are available to the same user. Further, it is unnecessary that the first electronic apparatus and the second electronic apparatus are different types of electronic apparatuses.

### < First Determination Server>

The 'first determination server' (0310) carries out a first determination of the first electronic apparatus based on identification information of first electronic apparatus in order to receive the first service from the first service server group. The 'identification information of first electronic apparatus' is for uniquely identifying the first electronic apparatus in the first service server group and in the first determination server. Note that it may be user identification information for identifying user who receives the first service via the first electronic apparatus. Therefore, the identification information of first electronic apparatus is identification information normally used for determination by the first determination server as to whether the first electronic apparatus is an appropriate electronic apparatus, which receives service, and is generally identification information for a system independently established in order to receive the first service. For example, it corresponds to the identification information used in an independent system (hereinafter, referred to as X), comprising a server for charge process and service server group for providing a plurality of services, which execute charge process by means of the server for charge process. The first determination server comprises the 'first storage unit for correlation' (0311), the 'output unit for first proof request' (0312), the 'receiving unit for first proof (0313), and the 'output unit for service request with proof (0314).

The 'first storage unit for correlation' (0311) stores the shared identification information of the user correlated with the identification information of first electronic apparatus. The term 'shared identification information' is information for uniquely identifying a user in the system. Normally, it is not necessary to use the shared identification information at the stage of establishment of the above-mentioned X system, but in order to implement cross-cutting use of different service systems, it is necessary to subsequently introduce conceptual information shared in the independent system. Therefore, after establishment of the independent system (e.g., the first service system), the shared identification information as the conceptual information is introduced in order to promote the cross-cutting use (e.g., using the first and second determination servers through one electronic apparatus) between the independent system and another independent system (e.g., the second service system). Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is independent identification information system upon establishing the independent service system.

Thus, in cases where the one user A receives the first and second services, the identification information of first electronic apparatus and the identification information of second electronic apparatus (after-defined), which is different identification information, are used. Accordingly, it is difficult for the first and second determination servers to recognize that the user A, who receives both services, is one person. However, by identifying by means of the shared identification information used in order to receive benefit of the present invention (i.e., cross-cutting use between different independent systems), it is possible to identify that the persons are the same one user A (for the first determination server, the user A is a user, who uses an electronic apparatus identified by the identification information of first electronic apparatus, which is an independent identification information system, and for the second determination server, the user A is a user, who uses an electronic apparatus identified by the identification information of second electronic apparatus, which is another independent identification information system).

The first determination server basically carries out a first determination as to whether the first electronic apparatus can receive the first service from the first service server group based on identification information of first electronic apparatus in order to establish the independent service system. This determination is carried out in cases where the first electronic apparatus transmits the identification information of first electronic apparatus of itself to the first determination server, thereby requesting the first service. The above processes are carried out within the system relating to the first service, and are independent processes in the first service system. The above processes are carried out in order to provide vertical service in the independent system, differently from the cross-cutting use of the different independent systems, which the present invention intends to implement.

The 'output unit for first proof request' (0312) outputs a first proof request including the shared identification information based on a usage request for the second determination server from the first electronic apparatus. This is an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to use encrypted content, downloaded by the second electronic apparatus, by the first determination server, and a request for acquiring a password via the second determination server in order to browse personal information (e.g., a schedule or a patient's chart), downloaded by the second electronic apparatus, by the first electronic apparatus are cited. Conventionally, these processes have been impossible for the first electronic apparatus. The reason for this is that the first electronic apparatus can receive service only in the first service system, and these processes are possible only for the second electronic apparatus in the second service system.

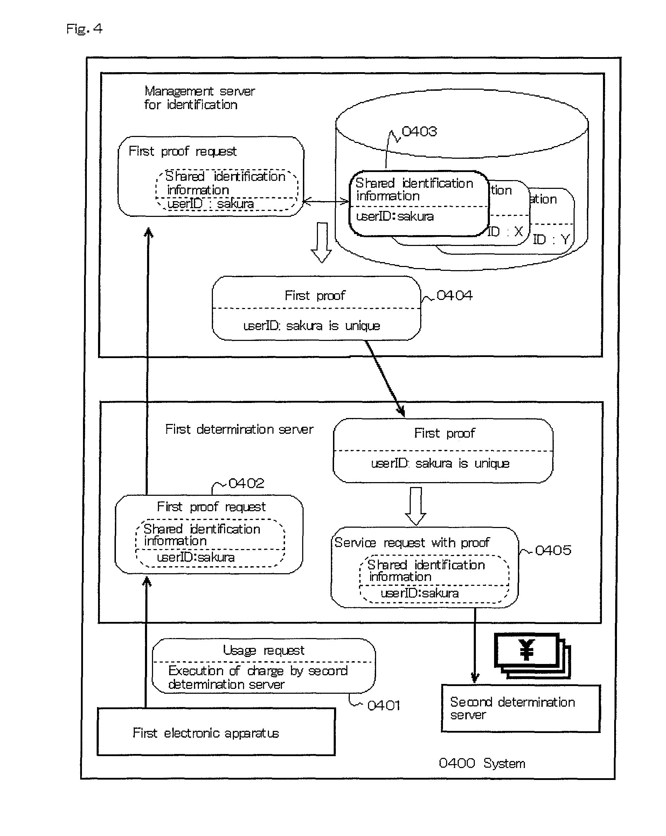

Fig. 4 concretely shows the information processed between the determination server and the management server for identification. In Fig. 4, a usage request (0401) shows a request for payment of the fee for the first service carried out via the second determination server. There is a possibility that the usage request includes the identification information of first electronic apparatus. Further, although it is not indicated, there is a possibility that the usage request is acquired via the first service server group.

The first proof request is outputted in order to acquire a proof indicating that a user, identified by the shared identification information by the management server for identification, solely exists. The first proof request may include information for identifying the second determination server other that the shared identification information (in Fig. 4, userID:sakura). In cases where the usage request includes the identification information of first electronic apparatus, the identification information of first electronic apparatus is extracted, and it is searched to determine whether the shared identification information correlated with the identification information of first electronic apparatus is stored in the first storage unit for correlation of the first determination server. Further, even in cases where the usage request does not include the identification information of first electronic apparatus, the identification information of first electronic apparatus upon start of session may be used in the same session, and moreover, the identification information of first electronic apparatus may be extracted from cookie issued from the server. After the search, in cases where the shared identification information is stored, it is acquired, is included in the first proof request (0402), and is outputted to the management server for identification.

The 'receiving unit for first proof (0313) receives the first proof returned from the management server for identification in accordance with the first proof request outputted from the output unit for first proof request (0312). The process in the management server for identification will be described hereinbelow. Fig. 4 shows that the first proof (0404) indicates that a user, identified by the shared identification information, solely exists.

The 'output unit for service request with proof (0314) outputs a service request with proof including the shared identification information based on the first proof received by the receiving unit for first proof (0313). The service request including the proof by the management server for identification is outputted from the first determination server, so that authenticity of the service request is proved even in the case that there is no relationship of trust between the first and second servers. Therefore, it is proved that the user identifiable by the shared identification information requests the service. As shown in Fig. 4, output of the service request with proof (0405) is carried out for the second determination server.

### < Second Determination Server>

The 'second determination server' (0320) carries out a second determination of the second electronic apparatus based on identification information of second electronic apparatus in order to receive the second service from the second service server group. The 'identification information of second electronic apparatus' is for uniquely identifying the second electronic apparatus in the second service server group and in the second determination server. Note that it may be user identification information for identifying user who receives the second service via the second electronic apparatus. Therefore, the identification information of second electronic apparatus is identification information normally used for determination by the second determination server as to whether the second electronic apparatus is an appropriate electronic apparatus, which receives service, and is generally identification information for a system independently established in order to receive the second service. For example, it corresponds to the identification information used in an independent system (hereinafter, referred to as X), comprising a server for charge process and service server group for providing a plurality of services, which execute charge process by means of the server for charge process. The second determination server comprises the 'second storage unit for correlation' (0321), and the 'receiving unit for service request with proof (0322).

The 'second storage unit for correlation' (0321) stores the shared identification information of the user correlated with the identification information of second electronic apparatus. Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is independent identification information system upon establishing the independent service system.

The second determination server carries out a second determination as to whether the second electronic apparatus can receive the second service from the second service server group based on identification information of second electronic apparatus in order to establish the independent service system. This determination is carried out in cases where the second electronic apparatus transmits the identification information of second electronic apparatus of itself to the second determination server, thereby requesting the second service. The above processes are carried out within the system relating to the second service, and are independent processes in the second service system. The above processes are carried out in order to provide vertical service in the independent system, differently from the cross-cutting use of the different independent systems, which the present invention intends to implement.

The 'receiving unit for service request with proof (0322) receives a service request with proof. The service request with proof is generated based on the first proof, thereby possessing high reliability. Therefore, the second determination server may provide service according to the received service request (e.g., payment of the fee for the first service in Fig. 4). Further, there is a case where the first proof outputted from the management server for identification is encrypted by the private key of the management server for identification. In this case, although the service request with proof includes encrypted proof, the second determination server may carry out decryption by means of the public key of the management server for identification, and may confirm content (e.g., shared identification information) of the proof. Further, the second determination server may carry out search by means of the shared identification information as a key based on the service request. This will be described in the second configuration of the first embodiment.

Note that it is proved that the user identified by the shared identification information solely exists, so that the second determination server can determine the authenticity of the service request. The reason for this is as follows. The second determination server usually uses the identification information of second electronic apparatus for identifying an electronic apparatus, which can receive service. Therefore, the identification information of second electronic apparatus is used for the second determination. Therefore, the second determination server can put trust in a target having the identification information of second electronic apparatus, but basically cannot confirm authenticity of a target by other means. Meanwhile, in the present invention, there is a case where the identification information of second electronic apparatus correlated with the shared identification information in the second determination server is exceptionally utilized. This correlation with the shared identification information means that, for example, a target identified by the identification information of second electronic apparatus (ID:020) and a target identified by the shared identification information (userID:sakura) are the same. Here, if the usage request for second determination server is sent from the target identified by the shared identification information (userID:sakura), the second determination server regards it as the request from the target identified by the identification information of second electronic apparatus (ID:020). However, if the identification information of second electronic apparatus, the userID:sakura, is redundantly given in the system, it is not limited to the above case. Therefore, there is a possibility that a user, who has the userID:sakura, and accesses from another server, is not a user of ID:020. In order to solve this problem, it is necessary to ensure that the identification information, userID:sakura, is not redundantly given in the system. Therefore, if the uniqueness of the userID:sakura is proved, the second determination server can process the unknown userID: sakura as the well-known ID:020. Accordingly, the second determination server can regard the userID:sakura as the ID:020, and can accept the request to use itself.

Although the first and second determination servers are distinguished in the above case, it does not mean that they cannot have similar functions. Therefore, the first determination server can comprise the receiving unit for service request with proof, and the second determination server can comprise the output unit for first proof request, the receiving unit for first proof, and the output unit for service request with proof.

### <Management server for identification>

The 'management server for identification' (0330) stores the shared identification information, and manages each server. There are relationships of trust between the management server for identification and the first determination server, and between the management server for identification and the second determination server. The 'management server for identification' (0330) comprises a 'management unit for identification' (0331), a 'search unit for management unit for identification' (0332), and an 'output unit for proof (0333).

The 'management unit for identification' (0331) manages shared identification information for uniquely identifying the user in the system. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user, necessary to use more than two services, is unique. Fig. 4 shows a frame format of the case where a plurality of shared identification information are stored and managed.

The 'search unit for management unit for identification' (0332) searches the management unit (0331) based on the first proof request outputted by the first determination server. The shared identification information included in the first proof request is extracted, and it is searched as to whether shared identification information corresponding to the searched identification information is managed in the management unit for identification. In Fig. 4, the shared identification information included in the first proof request outputted from the first determination server, and the shared identification information managed in the management unit for identification are verified, and search is carried out, thereby acquiring the matching shared identification information (0403).

The 'output unit for proof (0333) outputs the first proof based on a search result by the search unit for management unit for identification (0332). In cases where the uniquely matching shared identification information is acquired in the search by the search unit for management unit for identification, it is proved that the user identified by the shared identification information solely exists. The search result indicating the uniqueness of the shared identification information is necessary. The first proof is outputted only when the matching shared identification information is acquired in the search by the search unit for management unit for identification. If the matching shared identification information is not acquired, information indicating that may be separately outputted. The output destination of the first proof is the first determination server. Further, the first proof outputted to the first determination server may be encrypted by a private key of the management server for identification. In this case, the second determination server, which receives the service request with proof, carries out decryption by the public key of the management server for identification, and if the proof is confirmed, it is possible to prevent falsification and impersonation. In Fig. 4, from the search result, the first proof (0404), indicating that the user identified by the shared identification information (userID: sakura) solely exists, is acquired.

### <Second Configuration of First Embodiment>

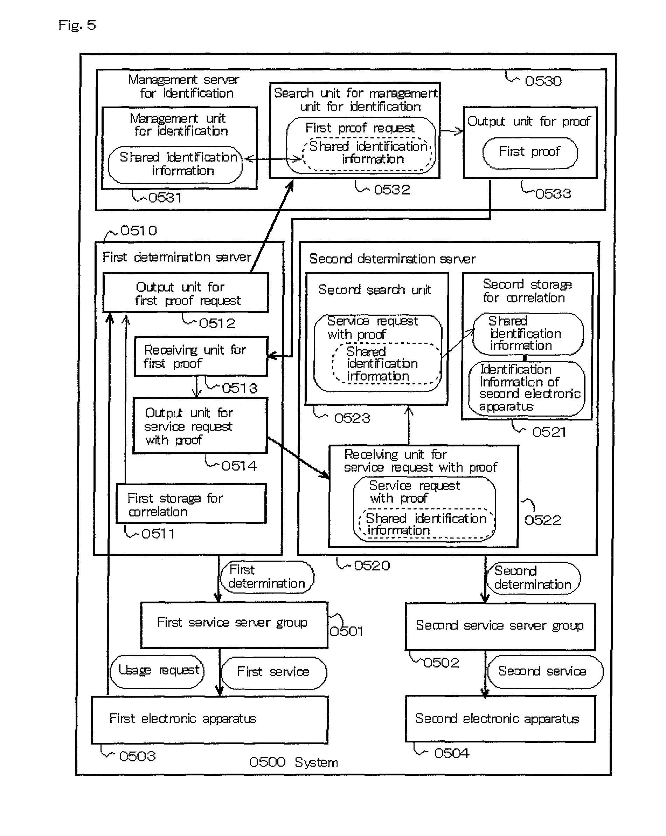

Fig. 5 is a functional block diagram of the first embodiment. A 'system' (0500) of the first embodiment as shown in Fig. 3 comprises a 'first service server group' (0501), a 'second service server group' (0502), a 'first electronic apparatus' (0503), a 'second electronic apparatus' (0504), a 'first determination server' (0510), a 'second determination server' (0520), and a 'management server for identification' (0530). The first determination server (0510) comprises a 'first storage unit for correlation' (0511), an 'output unit for first proof request' (0512), a 'receiving unit for first proof' (0513), and a 'output unit for service request with proof' (0514), and the second determination server (0520) further comprises a 'second storage unit for correlation' (0521), and a 'receiving unit for service request with proof (0522), and a 'second search unit' (0523). In addition, the management server for identification (0530) further comprises a 'management unit for identification' (0531), a 'search unit for management unit for identification' (0532), and an 'output unit for proof (0533).

The 'second search unit' (0523) searches the second storage unit for correlation (0521) by means of the shared identification information as a key based on the service request with proof received by the receiving unit for service request with proof (0522). In the search by means of the shared identification information as a key, the shared identification information included in the service request with proof is extracted, and it is searched as to whether shared identification information corresponding to the searched identification information is stored in the second storage unit for correlation. If the matching shared identification information is acquired, service (e.g., payment of the fee for the first service, transmission of decryption key of encrypted content, or transmission of password) may be provided according to the service request with proof. Further, the search result may be transmitted to the first determination server, or to the second electronic apparatus (via the second service server group).

The other processes of the respective components are the same as those of the first configuration of the first embodiment.

### <Hardware configuration of the present invention>

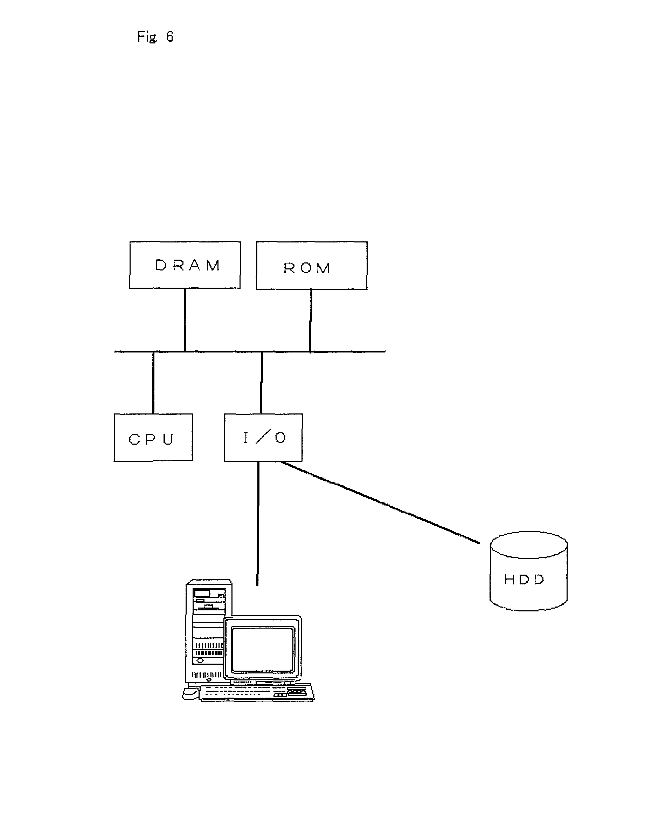

Fig. 6 is a diagram showing configuration of hardware such as each server of the present invention. Note that the respective units of the present invention can be configured by hardware, software, or both hardware and software. For example, in the case of using a computer, the respective units are implemented by the hardware configured by a CPU, a memory (DRAM or ROM), a bus, an I/O port etc., and by the software operable on the hardware. Concretely speaking, by sequentially carrying out programs on the memory, the data on the memory and the data inputted via the I/O port are processed, stored, and outputted etc., thereby implementing functions of the respective units. For example, the first determination server receives the usage request from the first electronic apparatus via the I/O port, and executes a program for generating the first proof request, thereby generating the first proof request. The generated first proof is transmitted to the management server for identification via the I/O port. Further, the shared identification information etc. is stored in HDD via the I/O port.

### <Processing Flow>

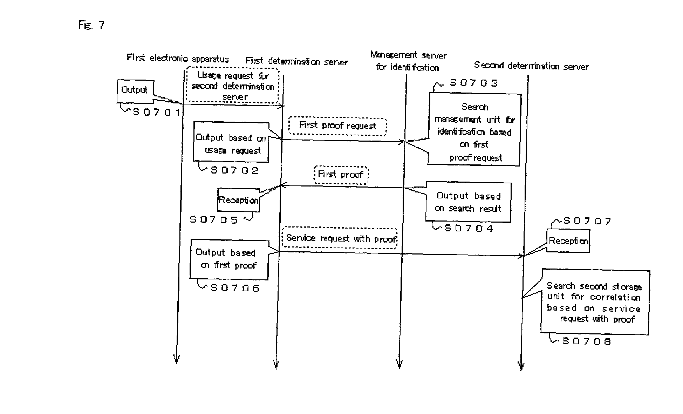

Fig. 7 is a flow chart showing the processing flow in the system of the first embodiment. In the management method for user identification of the system, at the outset, the first electronic apparatus outputs the usage request for the second determination server (outputting step for usage request S0701). Subsequently, the first determination server outputs the first proof request including the shared identification information based on the usage request (outputting step for first proof request S0702). In response to this, the management server searches the management unit, which manages the shared identification information for uniquely identifying a user, based on the first proof request outputted by the first determination server (searching step for management unit for identification S0703), and outputs the first proof based on a search result of the search step of management unit for identification (S0703) (outputting step for proof S0704). Here, it is determined whether the first proof is outputted based on the search result.

Subsequently, the first determination server receives the first proof returned from the management server for identification (receiving step for first proof S0705). Subsequently, a service request with proof including the shared identification information is outputted based on the first proof received by the receiving step for first proof (S0705) (outputting step for service request with proof S0706). In response to this, the second determination server receives the service request with proof (receiving step for service request with proof S0707).

In addition, there is a case where the second determination server further searches the second storage unit for correlation, which stores the shared identification information of the user correlated with the identification information of second electronic apparatus, by means of the shared identification information as a key based on the service request with proof received by the receiving step for service request with proof (S0707) (second search step S0708). Note that this is not an essential step.

The above processes can be executed by a program for causing a computer to execute them, and the program can be recorded in a recording medium readable by the computer (the same applies through the entire specification).

### <Brief Description of Effects of First Embodiment>

The first embodiment is a system comprising service server groups, electronic apparatuses, determination servers, and management server for identification. In the system, based on a usage request for the second determination server from the first electronic apparatus, the management server for identification, which has received a first proof request outputted from the first determination server, carries out searching a management unit for identification, and outputs the proof based on a search result. The management of user identification is carried out by incorporating a vertical-integrated system including the first electronic apparatus, the first service server, and the first determination server, with another vertical-integrated system, thereby flexibly providing service. In this case, by the proof given by the management server for identification, reliability of the system is improved, thereby ensuring secure environment of service provision.

### «Second embodiment»

### <Concept>

Hereinafter, a second embodiment will be described. The second embodiment is a system comprising service server groups, electronic apparatuses, determination servers, and management server for identification. In the system, based on a usage request for the second determination server from the first electronic apparatus, the management server for identification, which has received a service request with proof request outputted from the first determination server, carries out a search of a management unit for identification, and outputs the service request with proof based on a search result.

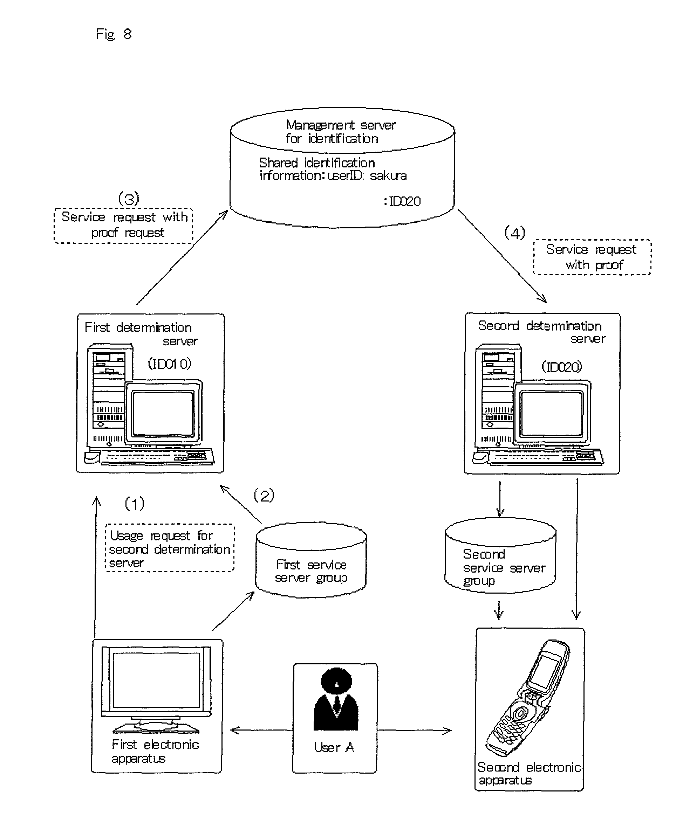

Fig. 8 is a conceptual diagram showing the second embodiment. Fig. 8 shows a relation between the respective servers and apparatuses configuring the system of the second embodiment. The first electronic apparatus and the second electronic apparatus are used by the one user A. The respective electronic apparatuses can receive various services such as internet browsing or reproducing content from a service server. In order to receive the service, a user preliminarily registers the shared identification information to the management server for identification. Further, the user is required to register the shared identification information to the respective determination servers. Note that, until this registration has been completed, the cross-cutting use between different independent systems, an objective of the present invention, is impossible.

Here, for example, when receiving service by means of an electronic apparatus, generally, a payment process of fee to the service provider etc. is carried out via the determination sever in the same system. Therefore, when receiving the first service by means of the first electronic apparatus, a payment process of fee to the service provider etc. is carried out via the first determination sever. Here, in the system of the second embodiment, a usage request for the second determination server from the first electronic apparatus to the first determination server is carried out, such that the payment process of fee for the service received by the first electronic apparatus can be carried out via the second determination sever.

At the outset, the first determination server receives the usage request for the second determination server from the first electronic apparatus (1). Note that the usage request may be received via the first service server (2). Subsequently, the first determination server outputs the service request with proof request, including the identification information of second determination server and the shared identification information, based on the usage request (3). This addition of the proof request to the service request is for acquiring the proof, indicating uniqueness of the shared identification information (userID:sakura) in the system, from the management server for identification. Subsequently, the management server for identification searches the management unit for identification based on the service request with proof request outputted by the first determination server, and outputs the service request with proof request based on a search result (4).

Subsequently, the second determination server receives a service request with proof outputted from the management server for identification. Here, the second determination server may provide the service according to the received service request after confirming the proof added to the received service request. Further, based on the service request with proof, there is the case where it is searched as to whether the shared identification information of the user and the identification information of second electronic apparatus are correlated and stored by means of the shared identification information as a key. This will be described in the second configuration of the second embodiment.

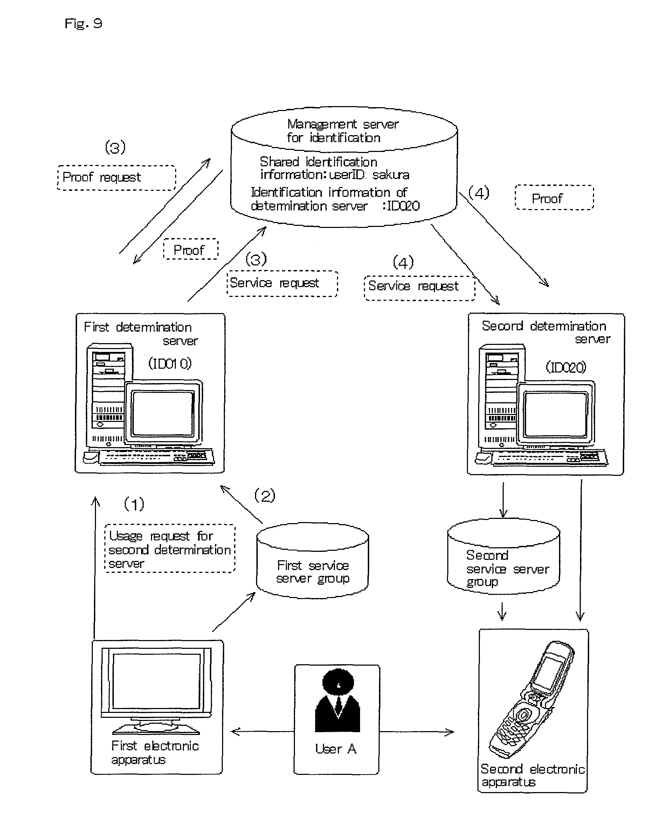

Fig. 9 shows not the case where the service request with proof request is outputted, but the case where the proof request and the service request are separately outputted. The first determination server outputs the proof request and the service request based on the usage request (3). Subsequently, the management server for identification receives the proof request and the service request outputted by the first determination server, and searches the management unit for identification based on the proof request and the service request. Based on the search result, the proof and the service request are outputted (4). Note that the first determination server may output the proof request, and may output the service request after receiving the proof outputted based on the search result of the management unit for identification by the management server for identification.

### <First Configuration of Second Embodiment>

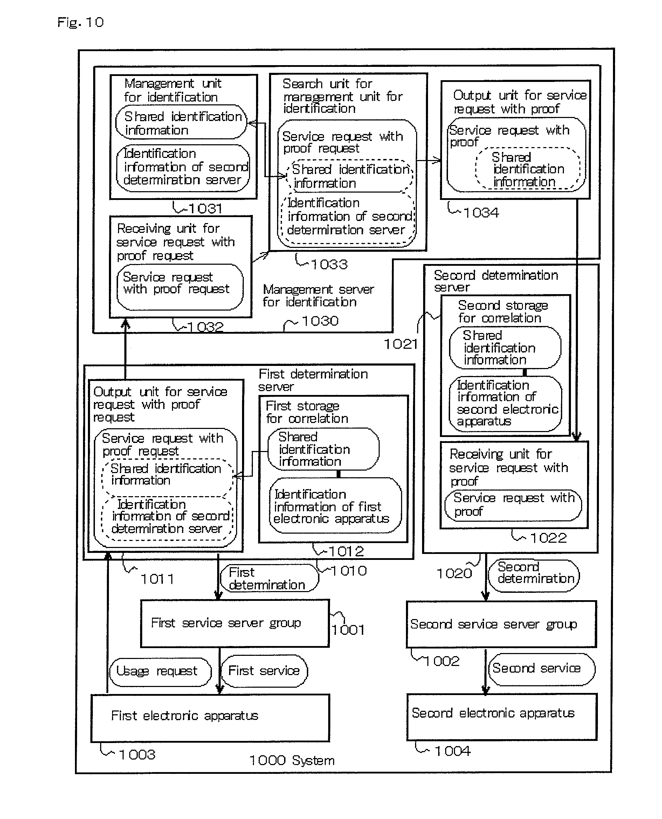

Fig. 10 is a functional block diagram of the second embodiment. A 'system' (1000) of the second embodiment as shown in Fig. 10 comprises a 'first service server group' (1001), a 'second service server group' (1002), a 'first electronic apparatus' (1003), a 'second electronic apparatus' (1004), a 'first determination server' (1010), a 'second determination server' (1020), and a 'management server for identification' (1030). The first determination server (1010) comprises a 'first storage unit for correlation' (1011), an 'output unit for service request with proof request' (1012), a 'receiving unit for first proof (1013), and a 'output unit for service request with proof (1014), and the second determination server (1020) comprises a 'second storage unit for correlation' (1021), and a 'receiving unit for service request with proof' (1022). In addition, the management server for identification (1030) comprises a 'management unit for identification' (1031), a 'receiving unit for service request with proof request' (1032), a 'search unit for management unit for identification' (1033), and an 'output unit for service request with proof' (1034).

### < First Determination Server>

The 'first determination server' (1010) carries out a first determination of the first electronic apparatus based on identification information of first electronic apparatus in order to receive the first service from the first service server group. The 'identification information of first electronic apparatus' is for uniquely identifying the first electronic apparatus in the first service server group and in the first determination server. Note that it may be user identification information for identifying user who receives the first service via the first electronic apparatus. Therefore, the identification information of first electronic apparatus is identification information normally used for determination by the first determination server as to whether the first electronic apparatus is an appropriate electronic apparatus, which receives service, and is generally identification information for a system independently established in order to receive the first service. For example, it corresponds to the identification information used in an independent system (hereinafter, referred to as X), comprising a server for charge process and service server group for providing a plurality of services, which execute charge process by means of the server for charge process. The first determination server comprises the 'first storage unit for correlation' (1011), and the 'output unit for service request with proof request' (1012).

The 'first storage unit for correlation' (1011) stores the shared identification information of the user correlated with the identification information of first electronic apparatus. The term 'shared identification information' is information for uniquely identifying a user in the system. Normally, it is not necessary to use the shared identification information at the stage of establishment of the above-mentioned X system, but in order to implement cross-cutting use of different service systems, it is necessary to subsequently introduce conceptual information shared in the independent system. Therefore, after establishment of the independent system (e.g., the first service system), the shared identification information as the conceptual information is introduced in order to promote the cross-cutting use (e.g., using the first and second determination servers through one electronic apparatus) between the independent system and another independent system (e.g., the second service system). Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is independent identification information system upon establishing the independent service system.

Thus, in cases where the one user A receives the first and second services, the identification information of first electronic apparatus and the identification information of second electronic apparatus, which are different identification information, are used. Accordingly, it is difficult for the first and second determination servers to recognize that the user A, who receives both services, is one person. However, by identifying by means of the shared identification information used in order to receive benefit of the present invention (i.e., cross-cutting use between different independent systems), it is possible to identify that the persons are the same one user A (for the first determination server, the user A is a user, who uses an electronic apparatus identified by the identification information of first electronic apparatus, which is an independent identification information system, and for the second determination server, the user A is a user, who uses an electronic apparatus identified by the identification information of second electronic apparatus, which is another independent identification information system).

The first determination server basically carries out a first determination as to whether the first electronic apparatus can receive the first service from the first service server group based on identification information of first electronic apparatus in order to establish the independent service system. This determination is carried out in cases where the first electronic apparatus transmits the identification information of first electronic apparatus of itself to the first determination server, thereby requesting the first service. The above processes are carried out within the system relating to the first service, and are independent processes in the first service system. The above processes are carried out in order to provide vertical service in the independent system, differently from the cross-cutting use of the different independent systems, which the present invention intends to implement.

The 'output unit for service request with second proof (1012) outputs the service request with second proof based on a search result by the search unit for management unit for identification. This is an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to use encrypted content, downloaded by the second electronic apparatus, by the first determination server, and a request for acquiring a password via the second determination server in order to browse personal information (e.g., a schedule or a carte), downloaded by the second electronic apparatus, by the first electronic apparatus are cited. Conventionally, these processes have been impossible for the first electronic apparatus. The reason for this is that the first electronic apparatus can receive service only in the first service system, and these processes are possible only for the second electronic apparatus in the second service system.

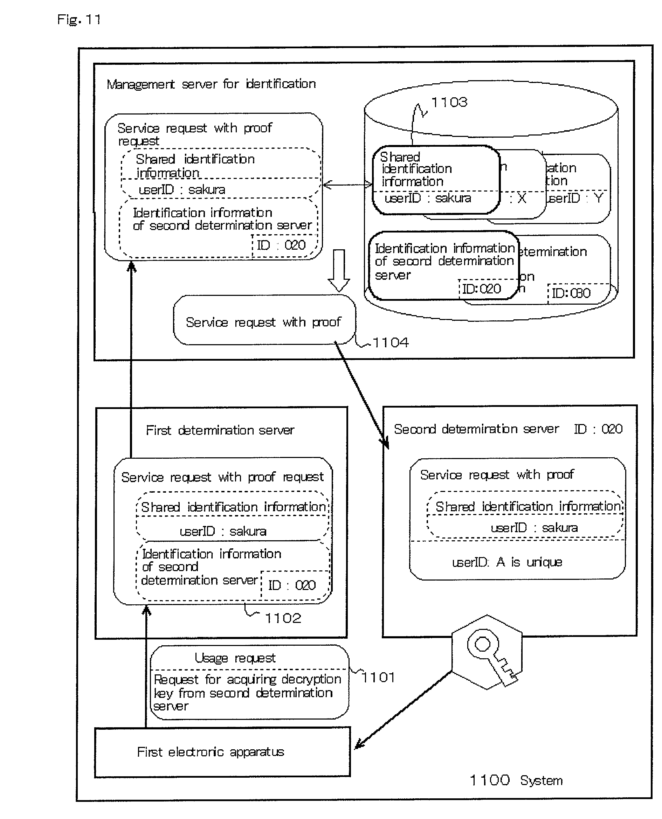

Fig. 11 concretely shows the information processed between the determination server and the management server for identification. In Fig. 11, a usage request (1101) shows a request for acquiring decryption key via the second determination server in order to make the encrypted content, downloaded by the second electronic apparatus, available for the first electronic apparatus. There is a possibility that the usage request includes the identification information of first electronic apparatus. Further, although it is not indicated, there is a possibility that the usage request is acquired via the first service server group.

The service request with proof request is outputted based on the usage request in order to acquire proof indicating that a user, identified by the shared identification information by the management server for identification, solely exists.

The service request with proof request include identification information of second determination server (in Fig. 11, ID:020) and the shared identification information (in Fig. 11, userID:sakura). In cases where the usage request includes the identification information of first electronic apparatus, the identification information of first electronic apparatus is extracted, and a search is done to determine whether the shared identification information correlated with the identification information of first electronic apparatus is stored in the first storage unit for correlation of the first determination server. Further, even in cases where the usage request does not include the identification information of first electronic apparatus, the identification information of first electronic apparatus upon start of session may be used in the same session, and moreover, the identification information of first electronic apparatus may be extracted from cookie issued from the server. After the search, if the shared identification information is stored, the shared identification information is acquired, is included in the service request with proof request (1102), and is outputted to the management server for identification. As to output of the service request with proof request, the proof request and the service request may be separately outputted.

### < Second Determination Server>

The 'second determination server' (1020) carries out a second determination of the second electronic apparatus based on identification information of second electronic apparatus in order to receive the second service from the second service server group. The 'identification information of second electronic apparatus' is for uniquely identifying the second electronic apparatus in the second service server group and in the second determination server. Note that it may be user identification information for identifying user who receives the second service via the second electronic apparatus. Therefore, the identification information of second electronic apparatus is identification information normally used for determination by the second determination server as to whether the second electronic apparatus is an appropriate electronic apparatus, which receives service, and is generally identification information for a system independently established in order to receive the second service. For example, it corresponds to the identification information used in an independent system (hereinafter, referred to as X), comprising a server for charge process and service server group for providing a plurality of services, which execute charge process by means of the server for charge process. The second determination server comprises the 'second storage unit for correlation' (1021), and the 'receiving unit for service request with proof (1022).

The 'second storage unit for correlation' (1021) stores the shared identification information of the user correlated with the identification information of second electronic apparatus. Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is independent identification information system upon establishing the independent service system.

The second determination server carries out a second determination as to whether the second electronic apparatus can receive the second service from the second service server group based on identification information of second electronic apparatus in order to establish the independent service system. This determination is carried out in cases where the second electronic apparatus transmits the identification information of second electronic apparatus of itself to the second determination server, thereby requesting the second service. The above processes are carried out within the system relating to the second service, and are independent processes in the second service system. The above processes are carried out in order to provide vertical service in the independent system, differently from the cross-cutting use of the different independent systems, which the present invention intends to implement.

The 'receiving unit for service request with proof (1022) receives a service request with proof outputted from the management server for identification. The service request with proof is returned from the management server for identification based on the service request with proof request outputted by the first determination server. The process in the management server for identification will be described hereinafter.

Note that it is proved that the user identified by the shared identification information solely exists, so that the second determination server can determine the authenticity of the service request. The reason for this is as follows. The second determination server usually uses the identification information of second electronic apparatus for identifying an electronic apparatus, which can receive service. Therefore, the identification information of second electronic apparatus is used for the second determination. Therefore, the second determination server can put trust in a target having the identification information of second electronic apparatus, but basically cannot confirm authenticity of a target by other means. Meanwhile, in the present invention, there is a case where the identification information of second electronic apparatus correlated with the shared identification information in the second determination server is exceptionally utilized. This correlation with the shared identification information means that, for example, a target identified by the identification information of second electronic apparatus (ID:020) and a target identified by the shared identification information (userID:sakura) are the same. Here, if the usage request for second determination server is sent from the target identified by the shared identification information (userID:sakura), the second determination server regards it as the request from the target identified by the identification information of second electronic apparatus (ID:020). However, if the identification information of second electronic apparatus, the userID:sakura, is redundantly given in the system, it is not limited to the above case. Therefore, there is a possibility that a user, who has the userID:sakura, and accesses from another server, is not a user of ID:020. In order to solve this problem, it is necessary to ensure that the identification information, userID:sakura, is not redundantly given in the system. Therefore, if the uniqueness of the userID:sakura is proved, the second determination server can process the unknown userID:sakura as the well-known ID:020. Accordingly, the second determination server can regard the userID:sakura as the ID:020, and can accept the request to use itself.

Although the first and second determination servers are distinguished in the above case, it does not mean that they cannot have similar functions. Therefore, the first determination server can comprise the receiving unit for service request with proof, and the second determination server can comprise the output unit for service request with proof request.

### <Management server for identification>

The 'management server for identification' (1030) stores the shared identification information, and manages each server. There are relationships of trust between the management server for identification and the first determination server, and between the management server for identification and the second determination server. The management server for identification comprises a 'management unit for identification' (1031), a 'receiving unit for service request with proof request' (1032), a 'search unit for management unit for identification' (1033), and an 'output unit for service request with proof (1034).

The 'management unit for identification' (1031) manages shared identification information for uniquely identifying the user in the system, and identification information for second determination server. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user, necessary to use more than two services, is unique. Further, the shared identification information and the identification information for second determination server may be correlated with each other. Fig. 11 shows a frame format of the case where a plurality of shared identification information and the identification information for second determination server are stored and managed.

The 'receiving unit for service request with proof request' (1032) receives the service request with proof request outputted by the first determination server. As to reception of the service request with proof request, the proof request and the service request may be separately received. In this case, for example, the proof request may be outputted from the first determination server, and based on this, search of the management unit for identification in the management server for identification may be carried out. The proof as a search result may be returned to the first determination server, and the first determination server receives the proof, and may output the service request.

The 'search unit for management unit for identification' (1033) searches the management unit (1031) by means of the shared identification information as a key based on the service request with proof request received by the receiving unit for service request with proof request (1032). The shared identification information included in the service request with proof request is extracted, and it is searched as to whether shared identification information corresponding to the searched identification information is managed in the management unit for identification. In Fig. 11, the shared identification information included in the service request with proof request outputted from the first determination server, and the shared identification information managed in the management unit for identification are verified, and search is carried out, thereby acquiring the matching shared identification information (1103). Further, if the matching shared identification information is acquired, the identification information of second determination server included in the service request with proof request, and the identification information of second determination server stored in the management unit for identification are collated, and it may be searched as to whether the matching identification information of second determination server is acquired.

The 'output unit for service request with proof (1034) outputs the service request with proof based on a search result by the search unit for management unit for identification (1033). By adding the proof, it is possible to prove that the user identified by the shared identification information solely exists.

The search result indicating the uniqueness of the shared identification information is necessary. The proof is outputted only when the matching shared identification information is acquired in the search by the search unit for management unit for identification. If the matching shared identification information is not acquired, information indicating that may be separately outputted. The output destination of the service request with proof is the second determination server. Further, the service request with proof outputted to the second determination server may be encrypted by the private key of the management server for identification. In this case, the second determination server, which receives the service request with proof, carries out decryption by the public key of the management server for identification, and if the proof is confirmed, it is possible to prevent falsification and impersonation. In Fig. 11, from the search result, the service request with proof (1104), indicating that the user identified by the shared identification information (userID:sakura) solely exists, is acquired. As to output of the service request with proof, the proof and the service request may be separately outputted.

The other processes of the service server groups and the electronic apparatuses are the same as those of the first embodiment.

### <Second Configuration of Second Embodiment>

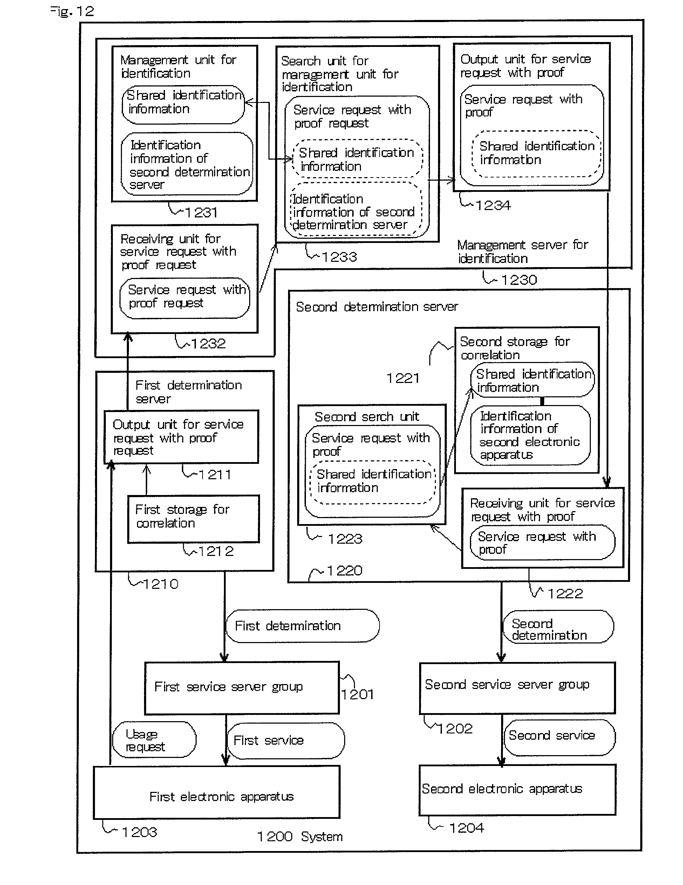

Fig. 12 is a functional block diagram of the first embodiment. A 'system' (1200) of the second embodiment as shown in Fig. 12 comprises a 'first service server group' (1201), a 'second service server group' (1202), a 'first electronic apparatus' (1203), a 'second electronic apparatus' (1204), a 'first determination server' (1210), a 'second determination server' (1220), and a 'management server for identification' (1230). The first determination server (1210) comprises a 'first storage unit for correlation' (1211), and an 'output unit for service request with proof request' (1212), and the second determination server (1220) comprises a 'second storage unit for correlation' (1221), and a 'receiving unit for service request with proof (1222), and a 'second search unit' (1223). In addition, the management server for identification (1230) further comprises a 'management unit for identification' (1231), a 'receiving unit for service request with proof request' (1232), a 'search unit for management unit for identification' (1233), and an 'output unit for service request with proof (1234).

The 'second search unit' (1223) searches the second storage unit for correlation (1121) by means of the shared identification information as a key based on the service request with proof received from the management server for identification. In the search by means of the shared identification information as a key, the shared identification information included in the service request with proof is extracted, and it is searched as to whether shared identification information corresponding to the searched identification information is stored in the second storage unit for correlation. If the matching shared identification information is acquired, service (e.g., payment of the fee for the first service, transmission of decryption key of encrypted content, or transmission of password) may be provided according to the service request with proof. Further, the search result may be transmitted to the first determination server, or to the second electronic apparatus (via the second service server group).

The other processes of the respective components are the same as those of the first configuration of the second embodiment.

### <Processing Flow>

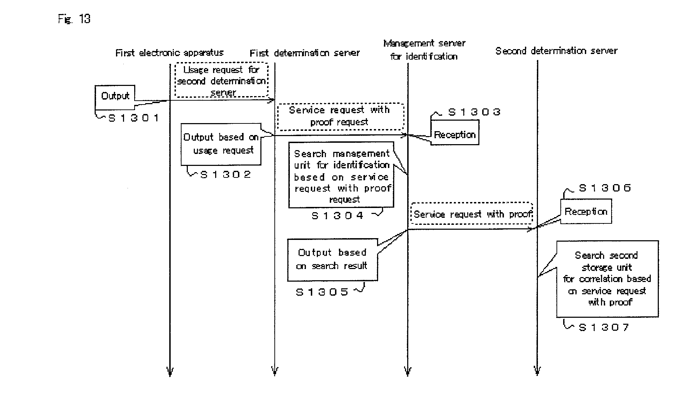

Fig. 13 is a flow chart showing processing flow in the system of the second embodiment. In the management method for user identification of the system, at the outset, the first electronic apparatus outputs the usage request for the second determination server (outputting step for usage request S1301). Subsequently, the first determination server outputs the service request with proof request including the identification information of second determination server and the shared identification information based on the usage request (outputting step for service request with proof request S1302). In response to this, the management server for identification receives the service request with proof request outputted from the first determination server (receiving step for service request with proof request S 1303). Subsequently, the management server for identification searches the management unit, which manages the shared identification information for uniquely identifying a user, and the identification information of second determination server, by means of the shared identification information as a key based on the service request with proof request received by the receiving step for service request with proof request (S1303) (searching step for management unit for identification S1304), and outputs the first proof based on a search result by the searching step for management unit for identification (S1304) (outputting step for service request with proof S1305). Here, it is determined whether the service request with proof is outputted based on the search result. Subsequently, the second determination server receives the service request with proof outputted from the management server for identification (receiving step for service request with proof S1306).

In addition, there is a case where the second determination server further searches the second storage unit for correlation, which stores the shared identification information of the user correlated with the identification information of second electronic apparatus, by means of the shared identification information as a key based on the service request with proof received by the receiving step for service request with proof (S1306) (second search step S1307). Note that this is not an essential step.

### <Brief Description of Effects of Second Embodiment>

The second embodiment is a system comprising service server groups, electronic apparatuses, determination servers, and management server for identification. In the system, based on a usage request for the second determination server from the first electronic apparatus, the management server for identification, which has received a service request with proof request outputted from the first determination server, carries out searching a management unit for identification, and outputs the service request with proof based on a search result. The management of user identification is carried out by incorporating a vertical-integrated system including the first electronic apparatus, the first service server, and the first determination server, with another vertical-integrated system, thereby flexibly providing service. In this case, the service request with proof is given from the management server for identification, so that it is possible to establish reliability, which is enough to provide service, even if there is no relation between the determination servers.

### «Third embodiment»

### <Concept>

Hereinafter, a third embodiment will be described. The third embodiment is a system comprising service server groups, electronic apparatuses, determination servers, and management server for identification. In the system, based on a usage request for the second determination server from the first electronic apparatus, the second determination server, which has received a first service request from the first determination server, outputs the second proof request to the management server for identification, and the management server for identification carries out a search of a management unit for identification, and outputs the proof based on the search result.

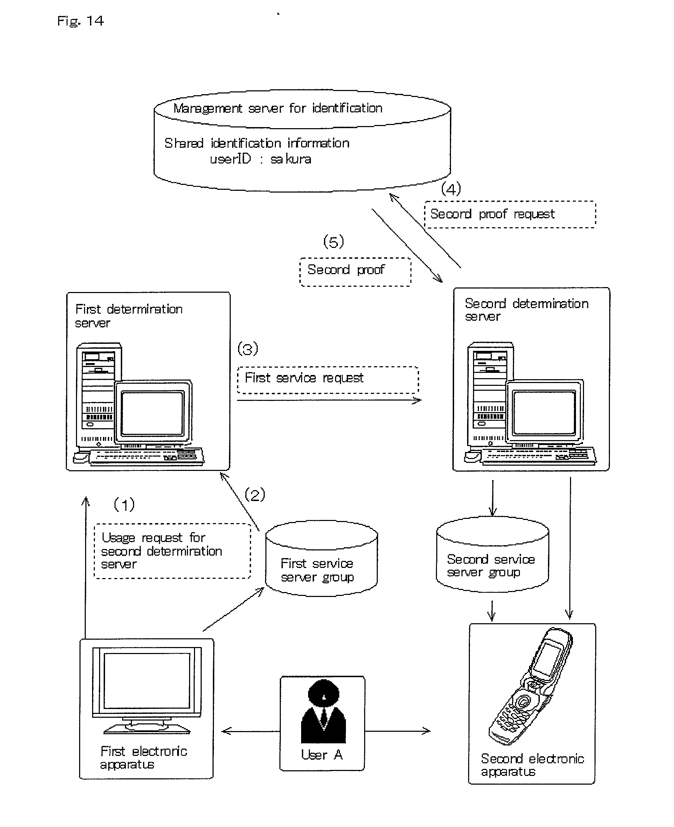

Fig. 14 is a conceptual diagram showing the third embodiment. Fig. 14 shows a relation between the respective servers and apparatuses configuring the system of the third embodiment. The first electronic apparatus and the second electronic apparatus are used by the one user A. The respective electronic apparatuses can receive various services such as internet browsing or reproducing content from a service server. In order to receive the service, a user preliminarily registers the shared identification information to the management server for identification. Further, the user is required to register the shared identification information to the respective determination servers. Note that, until this registration has been completed, the cross-cutting use between different independent systems, an objective of the present invention, is impossible.

Here, for example, when receiving service by means of an electronic apparatus, generally, a payment process of fee to the service provider etc. is carried out via the determination sever in the same system. Therefore, when receiving the service by means of the first electronic apparatus, a payment process of fee to the service provider etc. is carried out via the first determination sever. Here, in the system of the second embodiment, a usage request for the second determination server from the first electronic apparatus to the first determination server is carried out, such that the payment process of fee for the service received by the first electronic apparatus can be carried out via the second determination sever.

At the outset, the first determination server receives the usage request for the second determination server from the first electronic apparatus (1). Note that the usage request may be received via the first service server (2). Subsequently, the first determination server outputs the service request with proof request, including the shared identification information, based on the usage request (3). The first service request is outputted from the first determination server to the second determination server in order to request the service based on the usage request. Subsequently, the second determination server receives the first service request outputted by the first determination server, and based on it, outputs the second proof request including the shared identification information (4).

Meanwhile, the management server for identification receives the second proof request outputted by the second determination server, and based on it, searches the management unit for identification, and outputs the second proof based on a search result (5).

Further, the second determination server may provide service based on the second proof outputted from the management server for identification, and on the first service request outputted from the first determination server. Further, based on the first service request and the second proof, there is the case where it is searched as to whether the shared identification information of the user and the identification information of second electronic apparatus are correlated and stored by means of the shared identification information as a key. This will be described in the second configuration of the third embodiment.

### <First Configuration of Third Embodiment>

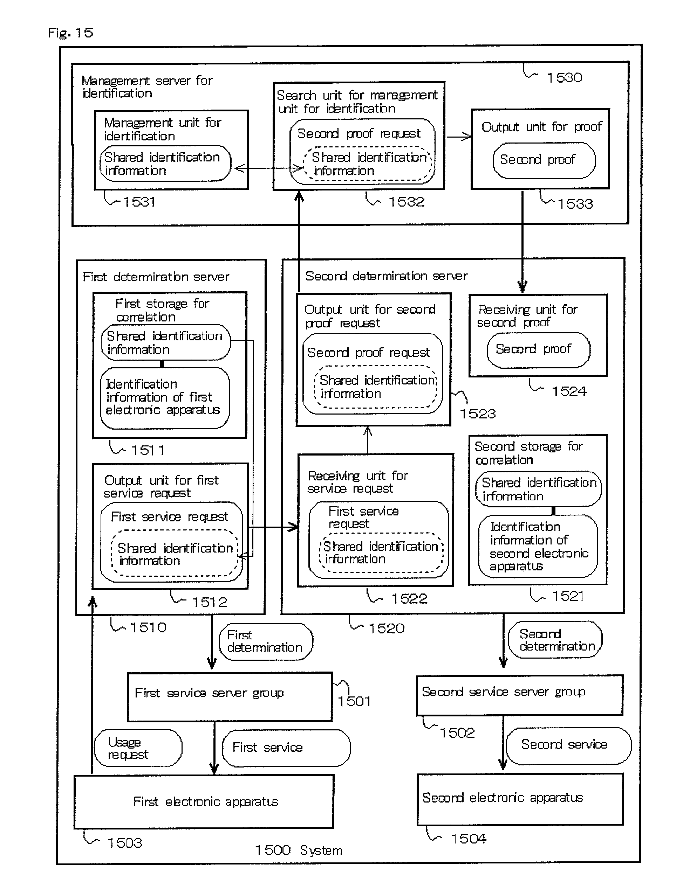

Fig. 15 is a functional block diagram of the third embodiment. A 'system' (1500) of the third embodiment as shown in Fig. 15 comprises a 'first service server group' (1501), a 'second service server group' (1502), a 'first electronic apparatus' (1503), a 'second electronic apparatus' (1504), a 'first determination server' (1510), a 'second determination server' (1520), and a 'management server for identification' (1530). The first determination server (1510) comprises a 'first storage unit for correlation' (1511), an 'output unit for first service request' (1512), and the second determination server (1520) comprises a 'second storage unit for correlation' (1521), a 'receiving unit for service request' (1522), a 'output unit for second proof request' (1523), and a 'receiving unit for second proof (1524). In addition, the management server for identification (1530) comprises a 'management unit for identification' (1531), a 'search unit for management unit for identification' (1532), and an 'output unit for proof (1533).

### < First Determination Server>

The 'first determination server' (1510) carries out a first determination of the first electronic apparatus based on identification information of first electronic apparatus in order to receive the first service from the first service server group. The 'identification information of first electronic apparatus' is for uniquely identifying the first electronic apparatus in the first service server group and in the first determination server. Note that it may be user identification information for identifying user who receives the first service via the first electronic apparatus. Therefore, the identification information of first electronic apparatus is identification information normally used for determination by the first determination server as to whether the first electronic apparatus is an appropriate electronic apparatus, which receives service, and is generally identification information for a system independently established in order to receive the first service. For example, it corresponds to the identification information used in an independent system (hereinafter, referred to as X), comprising a server for charge process and service server group for providing a plurality of services, which execute charge process by means of the server for charge process. The first determination server comprises the 'first storage unit for correlation' (1511), and the 'output unit for first service request' (1512).

The 'first storage unit for correlation' (1511) stores the shared identification information of the user correlated with the identification information of first electronic apparatus. The term 'shared identification information' is information for uniquely identifying a user in the system. Normally, it is not necessary to use the shared identification information at the stage of establishment of the above-mentioned X system, but in order to implement cross-cutting use of different service systems, it is necessary to subsequently introduce conceptual information shared in the independent system. Therefore, after establishment of the independent system (e.g., the first service system), the shared identification information as the conceptual information is introduced in order to promote the cross-cutting use (e.g., using the first and second determination servers through one electronic apparatus) between the independent system and another independent system (e.g., the second service system). Generally, it is assumed that this shared identification information is added to the determination server by the management server for identification according to desire of the user who owns the electronic apparatus. Of course, this explanation is just one example, and it is possible to preliminarily design, such that the shared identification information is used along with the identification information of apparatus, which is independent identification information system upon establishing the independent service system.

Thus, in cases where the one user A receives the first and second services, the identification information of first electronic apparatus and the identification information of second electronic apparatus, which are different identification information, are used. Accordingly, it is difficult to for the first and second determination servers to recognize that the user A, who receives both services, is one person. However, by identifying by means of the shared identification information used in order to receive benefit of the present invention (i.e., cross-cutting use between another independent systems), it is possible to identify that the persons are the same one user A (for the first determination server, the user A is a user, who uses an electronic apparatus identified by the identification information of first electronic apparatus, which is independent identification information system, and for the second determination server, the user A is a user, who uses an electronic apparatus identified by the identification information of second electronic apparatus, which is another independent identification information system).

The first determination server basically carries out a first determination as to whether the first electronic apparatus can receive the first service from the first service server group based on identification information of first electronic apparatus in order to establish the independent service system. This determination is carried out in cases where the first electronic apparatus transmits the identification information of first electronic apparatus of itself to the first determination server, thereby requesting the first service. The above processes are carried out within the system relating to the first service, and are independent processes in the first service system. The above processes are carried out in order to provide vertical service in the independent system, differently from the cross-cutting use of the different independent systems, which the present invention intends to implement.

The 'output unit for first service request' (1512) outputs a first service request including the shared identification information based on the usage request for second determination server from the first electronic apparatus. This is an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to use encrypted content, downloaded by the second electronic apparatus, by the first determination server, and a request for acquiring a password via the second determination server in order to browse personal information (e.g., a schedule or a patient's chart), downloaded by the second electronic apparatus, by the first electronic apparatus are cited. Conventionally, these processes have been impossible for the first electronic apparatus. The reason for this is that the first electronic apparatus can receive service only in the first service system, and these processes are possible only for the second electronic apparatus in the second service system.

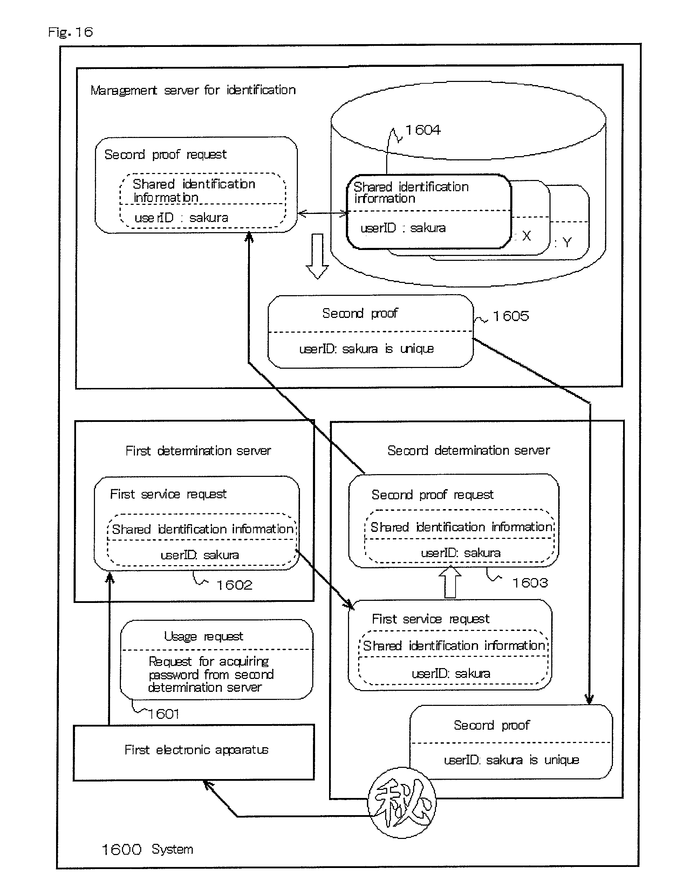

Fig. 16 concretely shows the information processed between the determination server and the management server for identification. In Fig. 16, a usage request (1601) shows a request for acquiring decryption key via the second determination server in order to make the encrypted content, downloaded by the second electronic apparatus, available for the first electronic apparatus. There is a possibility that the usage request includes the identification information of first electronic apparatus. Further, although it is not indicated, there is a possibility that the usage request is acquired via the first service server group.

The first service request is outputted to the second determination server in order to request service based on the usage request. The first service request includes the shared identification information (in Fig. 16, userID:sakura), and may include information for identifying the first determination server etc. The first service request is outputted in order to request service to the second determination server. In cases where the usage request includes the identification information of first electronic apparatus, the identification information of first electronic apparatus is extracted, and a search is done to determine whether the shared identification information correlated with the identification information of first electronic apparatus is stored in the first storage unit for correlation of the first determination server. Further, even in cases where the usage request does not include the identification information of first electronic apparatus, the identification information of first electronic apparatus upon start of session may be used in the same session, and moreover, the identification information of first electronic apparatus may be extracted from cookie issued from the server. After the search, in cases where the shared identification information is stored, it is acquired, is included in the first service request (1602), and is outputted to the second determination server.

### < Second Determination Server>

The 'second determination server' (1520) carries out a second determination of the second electronic apparatus based on identification information of second electronic apparatus in order to receive the second service from the second service server group. The 'identification information of second electronic apparatus' is for uniquely identifying the second electronic apparatus in the second service server group and in the second determination server. Note that it may be user identification information for identifying user who receives the second service via the second electronic apparatus. Therefore, the identification information of second electronic apparatus is identification information normally used for determination by the second determination server as to whether the second electronic apparatus is an appropriate electronic apparatus, which receives service, and is generally identification information for a system independently established in order to receive the second service. For example, it corresponds to the identification information used in an independent system (hereinafter, referred to as X), comprising a server for charge process and service server group for providing a plurality of services, which execute charge process by means of the server for charge process. The second determination server comprises the 'second storage unit for correlation' (1521), the 'receiving unit for service request' (1522), the 'output unit for second proof request' (1523), and the 'receiving unit for second proof (1524).

The 'second storage unit for correlation' (1521) stores the shared identification information of the user correlated with the identification information of second electronic apparatus. Generally, it is assumed that this shared identification information is added to the determination server according to the desire of the user who owns the electronic apparatus. Various distribution channel for providing the shared identification information to the determination server may exist, and it is not limited to one. Of course, this explanation is just one example, and it is possible to preliminarily design, such that the shared identification information is used along with the identification information of apparatus, which is independent identification information system upon establishing the independent service system.

The second determination server carries out a second determination as to whether the second electronic apparatus can receive the second service from the second service server group based on identification information of second electronic apparatus in order to establish the independent service system. This determination is carried out in cases where the second electronic apparatus transmits the identification information of second electronic apparatus of itself to the second determination server, thereby requesting the second service. The above processes are carried out within the system relating to the second service, and are independent processes in the second service system. The above processes are carried out in order to provide vertical service in the independent system, differently from the cross-cutting use of the different independent systems, which the present invention intends to implement.

The 'receiving unit for service request' (1522) receives the first service request outputted by the first determination server. Since the proof, indicating that the user identified by the shared identification information from the management server for identification solely exists, is not added to the received first service request, it is impossible to provide service.

The 'output unit for second proof request' (1523) outputs a second proof request including the shared identification information based on the first service request received by the receiving unit for service request (1522). The second proof request is outputted in order to acquire a proof indicating that the user identified by the shared identification information from the management server for identification solely exists. The second proof request includes the shared identification information, and may include information for identifying the first determination server etc. It is assumed that the shared identification information included in the first service request is extracted, is included in the second proof request (1603), and is outputted to the management server for identification.

The 'receiving unit for second proof (1524) receives the second proof outputted from the management server for identification based on the second proof request outputted from the output unit for second proof request (1523). The process in the management server for identification will be described hereinbelow. The second proof indicates that the user identified by the shared identification information from the management server for identification solely exists. Further, there is a case where the second proof outputted from the management server for identification is encrypted by the private key of the management server for identification. In this case, the second determination server may carry out decryption by means of the public key of the management server for identification, and may confirm content of the proof.

In Fig. 16, the second proof (1604) indicates that the user identified by the shared identification information solely exists. By acquiring the second proof, the second server can determine that the reliability of the service request from the first determination server is high, thereby providing service (in Fig. 16, transmission of password) in response to the received service request. Alternatively, the second determination server may carry out search by means of the shared identification information as a key based on the service request. This will be described in the second configuration of the third embodiment.

Note that it is proved that the user identified by the shared identification information solely exists, so that the second determination server can determine the authenticity of the service request. The reason for this is as follows. The second determination server usually uses the identification information of second electronic apparatus for identifying an electronic apparatus, which can receive service. Therefore, the identification information of second electronic apparatus is used for the second determination. Therefore, the second determination server can put trust in a target having the identification information of second electronic apparatus, but basically cannot confirm authenticity of a target by other means. Meanwhile, in the present invention, there is a case where the identification information of second electronic apparatus correlated with the shared identification information in the second determination server is exceptionally utilized. This correlation with the shared identification information means that, for example, a target identified by the identification information of second electronic apparatus (ID:020) and a target identified by the shared identification information (userID:sakura) are the same. Here, if the usage request for second determination server is sent from the target identified by the shared identification information (userID:sakura), the second determination server regards it as the request from the target identified by the identification information of second electronic apparatus (ID:020). However, if the identification information of second electronic apparatus, the userID:sakura, is redundantly given in the system, it is not limited to the above case. Therefore, there is a possibility that a user, who has the userID:sakura, and accesses from another server, is not a user of ID:020. In order to solve this problem, it is necessary to ensure that the identification information, userID:sakura, is not redundantly given in the system. Therefore, if the uniqueness of the userID:sakura is proved, the second determination server can process the unknown userIDaakura as the well-known ID:020. Accordingly, the second determination server can regard the userID:sakura as the ID:020, and can accept the request to use itself.

Although the first and second determination servers are distinguished in the above case, it does not mean that they cannot have similar functions. Therefore, the first determination server can comprise the receiving unit for service request, the output unit for first proof request, and the receiving unit for first proof, and the second determination server can comprise the output unit for second service request.

### <Management server for identification>

The 'management server for identification' (1530) stores the shared identification information, and manages each servers. There are relationships of trust between the management server for identification and the first determination server, and between the management server for identification and the second determination server. The 'management server for identification' (1530) comprises a 'management unit for identification' (1531), a 'search unit for management unit for identification' (1532), and an 'output unit for proof (1533).

The 'management unit for identification' (1531) manages shared identification information for uniquely identifying the user in the system. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user, necessary to use more than two services, is unique. Fig. 4 shows a frame format of the case where a plurality of shared identification information are stored and managed.

The 'search unit for management unit for identification' (1532) searches the management unit (1531) based on the second proof request outputted by the second determination server. The shared identification information included in the second proof request is extracted, and it is searched as to whether shared identification information corresponding to the searched identification information is managed in the management unit for identification. In Fig. 16, the shared identification information included in the second proof request outputted from the second determination server, and the shared identification information managed in the management unit for identification are verified, and search is carried out, thereby acquiring the matching shared identification information (1604).

The 'output unit for proof (1533) outputs the second proof based on a search result by the search unit for management unit for identification (1532). In cases where the uniquely matching shared identification information is acquired in the search by the search unit for management unit for identification, it is proved that the user identified by the shared identification information solely exists. The search result indicating the uniqueness of the shared identification information is necessary. The second proof is outputted only when the matching shared identification information is acquired in the search by the search unit for management unit for identification. If the matching shared identification information is not acquired, information indicating that may be separately outputted. The output destination of the second proof is the second determination server. Further, the second proof outputted to the second determination server may be encrypted by the private key of the management server for identification. In this case, the second determination server, which receives the second proof, carries out decryption by the public key of the management server for identification, and if the proof is confirmed, it is possible to prevent falsification and impersonation. In Fig. 16, from the search result, the second proof (1605), indicating that the user identified by the shared identification information (userID: sakura) solely exists, is acquired.

The other processes of the service server groups and the electronic apparatuses are the same as those of the first and second embodiments.

### <Second Configuration of Third Embodiment>

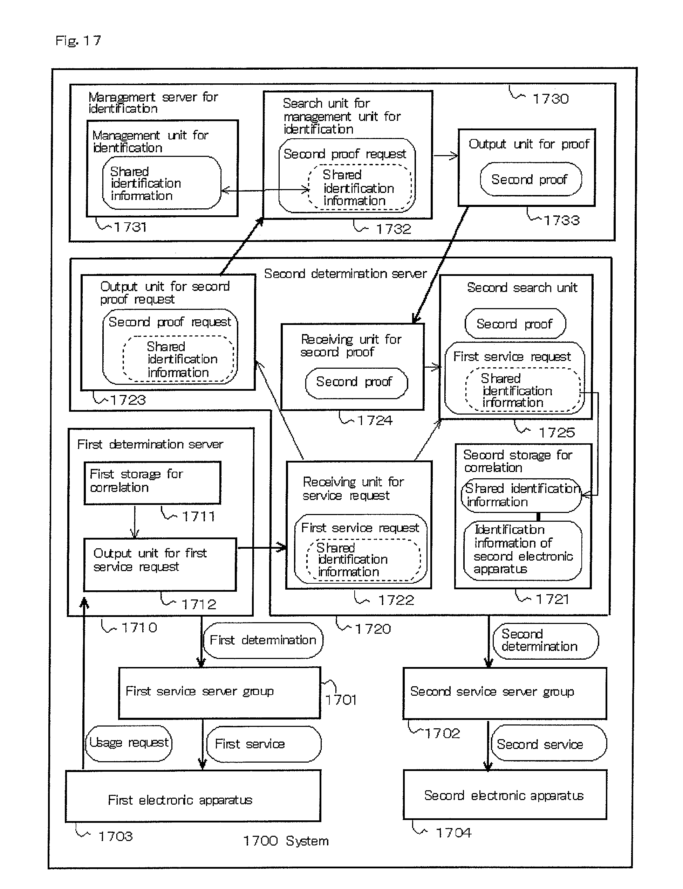

Fig. 17 is a functional block diagram of the third embodiment. A 'system' (1700) of the third embodiment as shown in Fig. 17 comprises a 'first service server group' (1701), a 'second service server group' (1702), a 'first electronic apparatus' (1703), a 'second electronic apparatus' (1704), a 'first determination server' (1710), a 'second determination server' (1720), and a 'management server for identification' (1730). The first determination server (1710) comprises a 'first storage unit for correlation' (1711), an 'output unit for first service request' (1712), a 'receiving unit for first proof' (1713), and an 'output unit for service request with proof (1714), and the second determination server (1720) further comprises a 'second storage unit for correlation' (1721), and a 'receiving unit for service request with proof (1722), a 'receiving unit for second proof, and a 'second search unit' (1725). In addition, the management server for identification (1730) further comprises a 'management unit for identification' (1731), a 'search unit for management unit for identification' (1732), and an 'output unit for proof (1733).

The 'second search unit' (1725) searches the second storage unit for correlation (1721) by means of the shared identification information as a key based on the first service request received by the receiving unit for service request (1722), and on the second proof received by the receiving unit for second proof (1724). In the search by means of the shared identification information as a key, the shared identification information included in the second proof is extracted, and it is searched as to whether shared identification information corresponding to the searched identification information is stored in the second storage unit for correlation. If the matching shared identification information is acquired, service (e.g., payment of the fee for the first service, transmission of decryption key of encrypted content, or transmission of password) may be provided according to the first service request. Further, the search result may be transmitted to the first determination server, or to the second electronic apparatus (via the second service server group).

The other processes of the respective components are the same as those of the first configuration of the third embodiment.

### <Processing Flow>

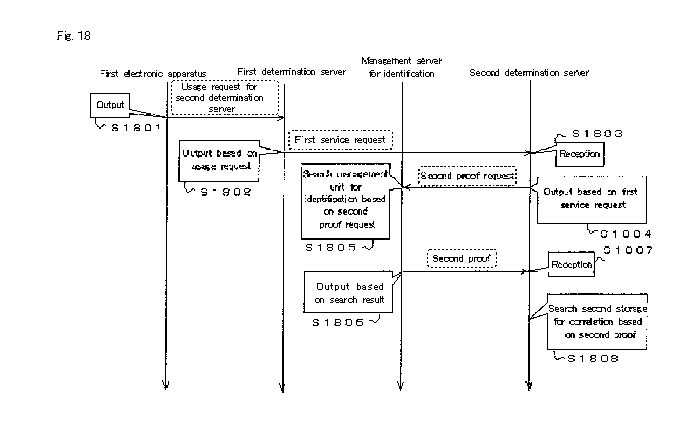

Fig. 18 is a flow chart showing a processing flow in the system of the third embodiment. In the management method for user identification of the system, at the outset, the first electronic apparatus outputs the usage request for the second determination server (outputting step for usage request S1801). Subsequently, the first determination server outputs the first service request including the identification information of second determination server and the shared identification information based on the usage request (outputting step for first service request S 1802). In response to this, the second determination server receives the first service request outputted by the first determination server (receiving step for first service request 1803). Subsequently, the second service request, including the shared identification information, is outputted based on the first service request received by the receiving step for first service request (1803) (outputting step for second proof request S1804).

In response to this, the management server for identification searches the management unit, which manages the shared identification information for uniquely identifying a user, based on the second proof request outputted by the second determination server (searching step for management unit for identification S 1805), and outputs the second proof based on a search result by the searching step for management unit for identification (S1805) (outputting step for proof S1806). Here, it is determined whether the second proof is outputted based on the search result.

Subsequently, the second determination server receives the second proof outputted from the management server for identification (receiving step for second proof S 1807).

In addition, there is a case where the second determination server further searches the second storage unit for correlation, which stores the shared identification information of the user correlated with the identification information of second electronic apparatus, by means of the shared identification information as a key based on the second proof received by the receiving step for second proof (S 1807) (second search step S1808). Note that this is not an essential step.

### <Brief Description of Effects of Third Embodiment>

The third embodiment is a system comprising service server groups, electronic apparatuses, determination servers, and management server for identification. In the system, based on a usage request for the second determination server from the first electronic apparatus, the management server for identification, which has received a service request with proof request outputted from the first determination server, carries out searching a management unit for identification, and outputs the service request with proof based on a search result. The management of user identification is carried out by incorporating a vertical-integrated system including the first electronic apparatus, the first service server, and the first determination server, with another vertical-integrated system, thereby flexibly providing service. In this case, even if there is a service request from a server, having no relationship of trust, by the proof given by the management server for identification, reliability of the system is improved, thereby ensuring secure environment of service provision.

## Claims

1. A system, comprising:
a first service server group, which provides a first service to a first electronic apparatus based on a first determination;
a second server group, which provides a second service to a second electronic apparatus based on a second determination;
a first electronic apparatus, which is used by a user, and receives the first service from the first service server group;
a second electronic apparatus, which is used by the user, and receives the second service from the second service server group;
a first determination server, which carries out a first determination of the first electronic apparatus based on identification information of first electronic apparatus in order to receive the first service from the first service server group;
a second determination server, which carries out a second determination of the second electronic apparatus based on identification information of second electronic apparatus in order to receive the second service from the second service server group; and
a management server for identification, in which a management unit for identification manages shared identification information for uniquely identifying the user in the system, wherein
the first determination server further comprises,
a first storage unit for correlation, which stores the shared identification information of the user correlated with the identification information of first electronic apparatus,
an output unit for first proof request, which outputs a first proof request including the shared identification information based on a usage request for the second determination server from the first electronic apparatus,
a receiving unit for first proof, which receives the first proof returned from the management server for identification in accordance with the first proof request outputted from said output unit for first proof request, and
an output unit for service request with proof, which outputs a service request with proof including the shared identification information based on the first proof received by said receiving unit for first proof,
the second determination server further comprises,
a second storage unit for correlation, which stores the shared identification information of the user correlated with the identification information of second electronic apparatus, and
a receiving unit for service request with proof, which receives the service request with proof, and
the management server for identification further comprises
a search unit for management unit for identification, which searches the management unit based on the first proof request outputted by the first determination server, and
an output unit for proof, which outputs the first proof based on a search result by the search unit for management unit for identification.

2. The system according to Claim 1, wherein
the second determination server further comprises
a second search unit, which searches the second storage unit for correlation by means of the shared identification information as a key based on the service request with proof received by said receiving unit for service request with proof.

3. A system, comprising:
a first service server group, which provides a first service to a first electronic apparatus based on a first determination;
a second server group, which provides a second service to a second electronic apparatus based on a second determination;
a first electronic apparatus, which is used by a user, and receives the first service from the first service server group;
a second electronic apparatus, which is used by the user, and receives the second service from the second service server group;
a first determination server, which carries out a first determination of the first electronic apparatus based on identification information of first electronic apparatus in order to receive the first service from the first service server group;
a second determination server, which carries out a second determination of the second electronic apparatus based on identification information of second electronic apparatus in order to receive the second service from the second service server group; and
a management server for identification, in which a management unit for identification manages shared identification information for uniquely identifying the user in the system, and the identification information of second electronic apparatus, wherein
the first determination server further comprises,
a first storage unit for correlation, which stores the shared identification information of the user correlated with the identification information of first electronic apparatus,
an output unit for service request with proof request, which outputs a service request with proof request including the identification information of second electronic apparatus and the shared identification information based on a usage request for the second determination server from the first electronic apparatus,
the second determination server further comprises,
a second storage unit for correlation, which stores the shared identification information of the user correlated with the identification information of second electronic apparatus, and
a receiving unit for service request with second proof, which receives a service request with second proof, outputted from the management server for identification, and
the management server for identification further comprises
a receiving unit for service request with proof request, which receives a service request with proof request, outputted from the first determination server,
a search unit for management unit for identification, which searches the management unit by means of the shared identification information as the key based on the service request with proof request received by the receiving unit for service request with proof request, and
an output unit for service request with second proof, which outputs the service request with second proof based on a search result by the search unit for management unit for identification.

4. The system according to Claim 3, wherein
the second determination server further comprises
a second search unit, which searches the second storage unit for correlation by means of the shared identification information as a key based on the service request with second proof received from the management server for identification.

5. A system, comprising:
a first service server group, which provides a first service to a first electronic apparatus based on a first determination;
a second server group, which provides a second service to a second electronic apparatus based on a second determination;
a first electronic apparatus, which is used by a user, and receives the first service from the first service server group;
a second electronic apparatus, which is used by the user, and receives the second service from the second service server group;
a first determination server, which carries out a first determination of the first electronic apparatus based on identification information of first electronic apparatus in order to receive the first service from the first service server group;
a second determination server, which carries out a second determination of the second electronic apparatus based on identification information of second electronic apparatus in order to receive the second service from the second service server group; and
a management server for identification, in which a management unit for identification manages shared identification information for uniquely identifying the user in the system, wherein
the first determination server further comprises,
a first storage unit for correlation, which stores the shared identification information of the user correlated with the identification information of first electronic apparatus, and
an output unit for first service request, which outputs a first service request including the shared identification information based on the usage request for second determination server from the first electronic apparatus, and
the second determination server further comprises,
a second storage unit for correlation, which stores the shared identification information of the user correlated with the identification information of second electronic apparatus,
a receiving unit for service request, which receives the first service request outputted by the first determination server,
an output unit for second proof request, which outputs a second proof request including the shared identification information based on the first service request received by the receiving unit for service request, and
a receiving unit for second proof, which receives the second proof outputted from the management server for identification based on the second proof request outputted from said output unit for second proof request, and
the management server for identification further comprises
a search unit for management unit for identification, which searches the management unit based on the second proof request outputted by the second determination server, and
an output unit for proof, which outputs the second proof based on a search result by the search unit for management unit for identification.

6. The system according to Claim 5, wherein,
the second determination server further comprises
a second search unit, which searches the second storage unit for correlation by means of the shared identification information as a key based on the first service request received by the receiving unit for service request, and on the second proof received by the receiving unit for second proof.

7. The first determination server according to Claim 1.

8. The second determination server according to Claim 1.

9. The second determination server according to Claim 2.

10. The management server for identification according to Claim 1.

11. A management method for user identification, including a system comprising
a first service server group, which provides a first service to a first electronic apparatus based on a first determination,
a second server group, which provides a second service to a second electronic apparatus based on a second determination,
a first electronic apparatus, which is used by a user, and receives the first service from the
first service server group,
a second electronic apparatus, which is used by the user, and receives the second service from the second service server group,
a first determination server, which carries out a first determination of the first electronic apparatus based on identification information of first electronic apparatus in order to receive the first service from the first service server group,
a second determination server, which carries out a second determination of the second electronic apparatus based on identification information of second electronic apparatus in order to receive the second service from the second service server group, and
a management server for identification, in which a management unit for identification manages shared identification information for uniquely identifying the user in the system, wherein
the first determination server further comprises,
a first storage unit for correlation, which stores the shared identification information of the user correlated with the identification information of first electronic apparatus,
an outputting step for first proof request, which outputs a first proof request including the shared identification information based on a usage request for the second determination server from the first electronic apparatus,
a receiving step for first proof, which receives the first proof returned from the management server for identification in accordance with the first proof request outputted from said outputting step for first proof request, and
an outputting step for service request with proof, which outputs a service request with proof including the shared identification information based on the first proof received by said receiving step for first proof,
the second determination server further comprises,
a second storage unit for correlation, which stores the shared identification information of the user correlated with the identification information of second electronic apparatus, and
a receiving step for service request with proof, which receives the service request with proof, and
the management server for identification further comprises
a searching step for management unit for identification, which searches the management unit based on the first proof request outputted by the first determination server, and
an outputting step for proof, which outputs the first proof based on a search result by the searching step for management unit for identification.

12. The management method for user identification according to Claim 11, wherein,
the second determination server further comprises
a second search step, which searches the second storage unit for correlation by means of the shared identification information as a key based on the service request with proof received by the receiving step for service request with proof.

13. The first determination server according to Claim 3.

14. The second determination server according to Claim 3.

15. The second determination server according to Claim 4.

16. The management server for identification according to Claim 3.

17. A management method for user identification, including a system comprising
a first service server group, which provides a first service to a first electronic apparatus based on a first determination,
a second server group, which provides a second service to a second electronic apparatus based on a second determination,
a first electronic apparatus, which is used by a user, and receives the first service from the first service server group,
a second electronic apparatus, which is used by the user, and receives the second service from the second service server group,
a first determination server, which carries out a first determination of the first electronic apparatus based on identification information of first electronic apparatus in order to receive the first service from the first service server group,
a second determination server, which carries out a second determination of the second electronic apparatus based on identification information of second electronic apparatus in order to receive the second service from the second service server group, and
a management server for identification, in which a management unit for identification manages shared identification information for uniquely identifying the user in the system, and the identification information of second electronic apparatus, wherein
the first determination server further comprises,
a first storage unit for correlation, which stores the shared identification information of the user correlated with the identification information of first electronic apparatus,
an outputting step for service request with proof request, which outputs a service request with proof request including the identification information of second electronic apparatus and the shared identification information based on a usage request for the second determination server from the first electronic apparatus,
the second determination server further comprises,
a second storage unit for correlation, which stores the shared identification information of the user correlated with the identification information of second electronic apparatus, and
a receiving step for service request with second proof, which receives a service request with second proof, outputted from the management server for identification, and
the management server for identification further comprises
a receiving step for service request with proof request, which receives a service request with proof request, outputted from the first determination server,
a searching step for management unit for identification, which searches the management unit by means of the shared identification information as the key based on the service request with proof request received by the receiving step for service request with proof request, and
an outputting step for service request with second proof, which outputs the service request with second proof based on a search result by the searching step for management unit for identification.

18. The management method for user identification according to Claim 17, wherein,
the second determination server further comprises
a second search step, which searches the second storage unit for correlation by means of the shared identification information as a key based on the service request with proof received from the identification management server.

19. The first determination server according to Claim 5.

20. The second determination server according to Claim 5.

21. The second determination server according to Claim 6.

22. The management server for identification according to Claim 5.

23. A management method for user identification, including a system comprising
a first service server group, which provides a first service to a first electronic apparatus based on a first determination,
a second server group, which provides a second service to a second electronic apparatus based on a second determination,
a first electronic apparatus, which is used by a user, and receives the first service from the first service server group,
a second electronic apparatus, which is used by the user, and receives the second service from the second service server group,
a first determination server, which carries out a first determination of the first electronic apparatus based on identification information of first electronic apparatus in order to receive the first service from the first service server group,
a second determination server, which carries out a second determination of the second electronic apparatus based on identification information of second electronic apparatus in order to receive the second service from the second service server group, and
a management server for identification, in which a management unit for identification manages shared identification information for uniquely identifying the user in the system, wherein
the first determination server further comprises,
a first storage unit for correlation, which stores the shared identification information of the user correlated with the identification information of first electronic apparatus, and
an outputting step for first service request, which outputs a first service request including the shared identification information based on the usage request for second determination server from the first electronic apparatus, and
the second determination server further comprises,
a second storage unit for correlation, which stores the shared identification information of the user correlated with the identification information of second electronic apparatus,
a receiving step for service request, which receives the first service request outputted by the first determination server,
an outputting step for second proof request, which outputs a second proof request including the shared identification information based on the first service request received by the receiving step for service request, and
a receiving step for second proof, which receives the second proof outputted from the management server for identification based on the second proof request outputted from said outputting step for second proof request, and
the management server for identification further comprises
a searching step for management unit for identification, which searches the management unit based on the second proof request outputted by the second determination server, and
an outputting step for proof, which outputs the second proof based on a search result by the searching step for management unit for identification.

24. The system according to Claim 23, wherein,
the second determination server further comprises
a second searching step, which searches the second storage unit for correlation by means of the shared identification information as a key based on the first service request received by the receiving step for service request, and on the second proof received by the receiving step for second proof.
